# EUROPEAN PATENT SPECIFICATION

(11) **EP 1 798 248 B1**
(45) Date of publication and mention of the grant of the patent: **12.03.2014**
(21) Application number: 05785565.2
(22) Date of filing: 21.09.2005
(51) Int. Cl.: C08G 18/08, C08G 18/34, C08G 18/38, C08G 18/42, C08G 18/66, C09D 175/04, C08G 18/12, C08G 18/28, C08G 18/72, C08G 18/79

(54) **WATER-DISPERSED POLYURETHANE COMPOSITION**
WASSERDISPERGIERTE POLYURETHANZUSAMMENSETZUNG
PREPARATION DE POLYURETHANE HYDRODISPERSEE

(30) Priority: 05.10.2004 JP 2004292099
(43) Date of publication of application: 20.06.2007
(73) Proprietor: Adeka Corporation, Tokyo 116-8554 (JP)
(72) Inventor: FUJITA, Naohiro, Saitama-gun, Saitama 3460101 (JP); MURANO, Fumiaki, Saitama-gun, Saitama 3460101 (JP); OHYAGI, Atsushi, Saitama-gun, Saitama 3460101 (JP)
(74) Representative: Forstmeyer, Dietmar
(86) International application number: PCT/JP2005/017390
(87) International publication number: WO 2006/038466

(56) References cited:
- EP-A- 0 554 747
- JP-A- 01 110 094
- JP-A- 02 250 872
- JP-A- 07 268 059
- JP-A- 08 085 716
- JP-A- 09 003 147
- JP-A- 2000 178 335
- JP-A- 2004 195 385
- US-A- 5 086 175

## Description

### Technical Field

The present invention relates to a water-dispersed polyurethane composition, and more particularly, relates to a water-dispersed polyurethane composition that contains a nurate compound having a long-chain alkyl group as a polyisocyanate component and can provide coating films excellent in adhesiveness, water resistance, weather resistance, corrosion resistance, water repellency, oil repellency.

### Background Art

Polyurethane resins are widely used for paint, adhesive, binder, coating agent, and the like since they provide coating films and molded articles with abrasion resistance, adhesiveness, non-stickiness, rubber elasticity, and the like. Recently, a number of water-dispersed polyurethane compositions have been reported from the viewpoints of safety such as countermeasure against environmental pollution and occupational hygiene. However, water-dispersed polyurethane compositions have a problem that they are inferior in water resistance, heat resistance, tensile property, or other properties compared to solvent-based compositions or solvent-free compositions.

When used as paint, the water-dispersed polyurethane composition needs excellent adhesiveness to a substrate as well as physical properties such as water resistance, heat resistance, and tensile property. Furthermore, it also needs excellence in weather resistance, corrosion resistance, water repellency, oil repellency, and the like in order to maintain high durability. Particularly when a water-dispersed polyurethane composition is used as paint for surface-treated steel plates, especially high corrosion resistance is required; however, there is not yet obtained any composition with satisfactory performance.

For example, Patent Document 1 proposes a hard adhesive material that is smoothly peeled off, which contains the reaction product of a polyisocyanate with a monofunctional aliphatic derivative as a major component. However, even suggestion is not given regarding application of the reaction product to water-dispersed polyurethane in combination with a polyol component and an anionic group-containing compound.

Patent Document 2 proposes, in order to improve water repellency and oil repellency of fiber substrates, a fluoropolymer obtained by reacting a polyoxyalkylene-containing substance with a reaction product of a polyisocyanate with a fluoroalcohol. However, when the fluoropolymer is used, for example, as paint for steel plates, it is not preferable because of poor adhesiveness.

Patent Document 1: Japanese Patent Application Laid-Open No. 2000-506187A
Patent Document 2: Japanese Patent Application Laid-Open No. H11-511814A

### Disclosure of the Invention

### Problems to be Solved by the Invention

Accordingly, an object of the present invention is to provide a water-dispersed polyurethane composition that is excellent in adhesiveness, water resistance, corrosion resistance, heat resistance, weather resistance, water repellency, oil repellency, and suitably used in paint for surface-treated steel plates.

### Means for Solving the Problems

The present inventors have found, as a result of the intensive studies, that the above object can be achieved by using a nurate compound having a long-chain alkyl group as a polyisocyanate component and have achieved the present invention.

In other words, the present invention provides a water-dispersed polyurethane composition comprising a polyisocyanate component (a), a polyol component (b), and water as essential components, wherein, at least, an isocyanate represented by general formula (I) below is used as the polyisocyanate component (a).

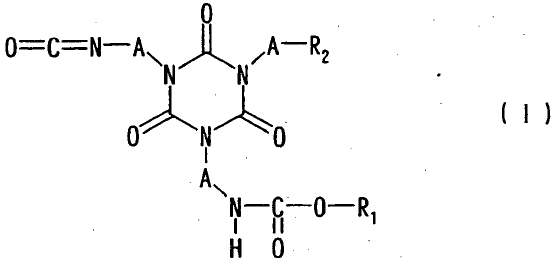

wherein R₁ represents an alkyl group having 10 to 30 carbon atoms, R₂ represents - N=C=O or NH-C(=O)-O-R₁, and A represents a residue other than two -N=C=O groups derived from a diisocyanate.

### Best Mode for Carrying out the Invention

Hereinafter, the water-dispersed polyurethane composition of the present invention will be explained in detail.

The isocyanate compound represented by general formula (I), which is used as polyisocyanate component (a) in the present invention (hereinafter, may be simply called "component (a)"), can be obtained by adding a long-chain alcohol to a nurate form (trimer) of diisocyanate.

The diisocyanate that can form a nurate form includes, for example, aromatic diisocyanates such as tolylene diisocyanate, diphenylmethane-4,4'-diisocyanate, p-phenylene diisocyanate, xylylene diisocyanate, 1,5-naphthylene diisocyanate, 3,3'-dimethyldiphenyl-4,4'-diisocyanate, dianisidine diisocyanate, and tetramethylxylylene diisocyanate; alicyclic diisocyanates such as isophorone diisocyanate, dicyclohexylmethane-4,4'-diisocyanate, trans- and/or cis-1,4-cyclohexane diisocyanate, and norbornene diisocyanate; aliphatic diisocyanates such as 1,6-hexamethylene diisocyanate, 2,2,4- and/or 2,4,4-trimethylhexamethylene diisocyanate, and lysine diisocyanate; and mixtures thereof.

Among these diisocyanates, there is(are) preferably used one or more compounds selected from the group consisting of 1,6-hexamethylene diisocyanate, dicyclohexylmethane-4,4'-diisocyanate, and isophorone diisocyanate, especially 1,6-hexamethylene diisocyanate, because the resultant water-dispersed polyurethane composition is further excellent in adhesiveness, corrosion resistance, strength.

Here, the nurate form of diisocyanate can be obtained, for example, by polymerizing of the diisocyanate by a known method with a known catalyst, for example, tertiary amine, quaternary ammonium salt, Mannich base, alkali metal salt of fatty acid, alcoholate, or the like, in an inert solvent such as methyl acetate, ethyl acetate, butyl acetate, methyl ethyl ketone, and dioxane, or in a plasticizer. Here, the plasticizer includes phthalate esters such as diethyl phthalate, dibutyl phthalate, di-2-ethylhexyl phthalate, mixed alkyl phthalates wherein each alkyl group has 7 to 11 carbon atoms (hereinafter may be called "C₇-C₁₁"), butyl benzyl phthalate; and hexanol benzyl phthalate, phosphate esters such as tricresyl phosphate and triphenyl phosphate, adipate esters such as di-2-ethylhexyl adipate, and trimellitate esters such as (C₇-C₁₁-mixed alkyl) trimellitate. When the polymerization is conducted in a highly volatile solvent, it is preferred to substitute the solvent with an appropriate higher boiling solvent, for example, a plasticizer, in the final step.

The long-chain alcohol to be added to the nurate form includes, linear or branched alcohols having 10 to 30 carbon atoms such as decanol, undecanol, dodecanol, tridecanol, tetradecanol, pentadecanol, hexadecanol, heptadecanol, octadecanol, nonadecanol, eicosanol, heneicosanol, docosanol, tricosanol, tetracosanol, pentacosanol, hexacosanol, heptacosanol, octacosanol, nonacosanol, and triacontanol.

Among these long-chain alcohols, a long-chain alcohol having 15 to 25 carbon atoms, especially n-octadecanol, is preferably used because the resultant water-dispersed polyurethane composition is further excellent in water repellency and lubricity.

The method for producing the isocyanate represented by general formula (I) from such a nurate form and long-chain alcohol is not specifically limited. The isocyanate may be readily produced, for example, by a method in which 1 to 2 molar equivalents of the long chain alcohol is added, at a time or stepwise, to the nurate form of diisocyanate and the mixture is heated to proceed the reaction.

As polyisocyanate component (a) used in the present invention, although the isocyanate represented by general formula (1) may be used alone, it is preferred to use the isocyanate represented by general formula (I) in combination with a diisocyanate.

The diisocyanate includes, for example, aromatic diisocyanates such as tolylene diisocyanate, diphenylmethane-4,4'-diisocyanate, p-phenylene diisocyanate, xylylene diisocyanate, 1,5-naphthylene diisocyanate, 3,3'-dimethyldiphenyl-4,4'-diisocyanate, dianisidine diisocyanate, and tetramethylxylylene diisocyanate; alicylic diisocyanates such as isophorone diisocyanate, dicyclohexylmethane-4,4'-diisocyanate, trans- and/or cis-1,4-cyclohexane diisocyanate, and norbornene diisocyanate; aliphatic diisocyanates such as 1,6-hexamethylene diisocyanate, 2,2,4-and/or 2,4,4-trimethylhexamethylene diisocyanate, and lysine diisocyanate; and the mixtures thereof. The diisocyanate may be used in a modified form such as a carbodiimide- or biuret-modified form, or may be used in a blocked isocyanate in which the isocyanate groups are blocked with any kind of blocking agent. Of these, preferably used are dicyclohexylmethane-4,4'-diisocyanate and isophoronediisocyanate, and especially preferably used is dicyclohexylmethane-4,4'-diisocyanate.

As component (a), there may be used a polyisocyanate having three or more isocyanate groups, where necessary. The polyisocyanate includes, for example, tri- or higher-functional isocyanates such as triphenylmethane triisocyanate, 1-methylbenzene-2,4,6-triisocyanate, dimethyltriphenylmethane tetraisocyanate, and the mixtures thereof; modified derivatives, such as carbodiimide-, isocyanurate-, or biuret-modified form, of these tri- or higher-functional isocyanates; blocked isocyanates in which the isocyanate groups in these polyisocyanates are blocked with various blocking agents; isocyanurate trimers, or biuret trimers of diisocyanates listed above.

On polyisocyanate component (a) used in the present invention, there is no particular limitation except that it contains the isocyanate represented by general formula (I) as an essential component. However, as for the contents of the isocyanate, the above diisocyanate, and the above polyisocyanate in component (a), the content of the isocyanate represented by general formula (I) is preferably 10 to 90% by mass and especially preferably 20 to 80% by mass, and the content of the diisocyanate [except trifunctional modified forms such as biuret-form] is preferably 10 to 90% by mass and especially preferably 20 to 80% by mass, and that the polyisocyanate is preferably less than 20% by mass and especially preferably less than 10% by mass.

Polyol component (b) used in the present invention (hereinafter simply called "component (b)") is composed of a diol component having two hydroxyl groups that react with isocyanate groups in the polyisocyanate component serving as component (a) to form a urethane bond, and where necessary, a polyol component having three or more hydroxyl groups in the molecule. Here, there is no limitation on the composition ratio.

The diol component and polyol component used in polyol component (b) include, for example, low-molecular-weight polyols, polyetherpolyols, polyesterpolyols, polyesterpolycarbonatepolyols, crystalline or non-crystalline polycarbonatepolyols.

The low-molecular-weight polyols include, for example, aliphatic diols such as ethylene glycol, 1,2-propanediol, 1,3-propanediol, 2-methyl-1,3-propanediol, 2-butyl-2-ethyl-1,3-propanediol, 1,4-butanediol, neopentyl glycol, 3-methyl-2,4-pentanediol, 2,4-pentanediol, 1,5-pentanediol, 3-methyl-1,5-pentanediol, 2-methyl-2,4-pentanediol, 2,4-diethyl-1,5-pentanediol, 1,6-hexanediol, 1,7-heptanediol, 3,5-heptanediol, 1,8-octanediol, 2-methyl-1,8-octanediol, 1,9-nonanediol, 1,10-decanediol, and ethylene oxide- and/or propylene oxide-adduct of bisphenol A; alicyclic diols such as cyclohexanedimethanol and cyclohexanediol; trihydric or higher polyols such as trimethylolethane, trimethylolpropane, hexitols, pentitols, glycerin, polyglycerin, pentaerythritol, dipentaerythritol, and tetramethylolpropane.

The polyetherpolyols include, for example, homoadducts of ethylene oxide such as diethylene glycol and triethylene glycol, homoadducts of propylene oxide such as dipropylene glycol and tripropylene glycol, ethylene oxide- and/or propylene oxide-adducts of the above low-molecular-weight polyols, polytetramethylene glycol.

The polyesterpolyols include a polyesterpolyol obtained by direct esterification and/or ester-exchange reaction of a polyol such as the above low-molecular-weight polyols with a less than stoichiometric quantity of one or more reagents selected from the group consisting of polycarboxylic acids, ester-forming derivatives (ester, anhydride, halide, and the like) of the polycarboxylic acids, lactones, and hydroxycarboxylic acids obtained by ring-opening hydrolysis of the lactones. The polycarboxylic acid includes, for example, aliphatic dicarboxylic acids such as oxalic acid, malonic acid, succinic acid, glutaric acid, adipic acid, pimeric acid, suberic acid, azelaic acid, sebacic acid, dodecanedioic acid, 2-methylsuccinic acid, 2-methyladipic acid, 3-methyladipic acid, 3-methylpentanedioic acid, 2-methyloctanedioic acid, 3,8-dimethyldecanedioic acid, 3,7-dimethyldecanedioic acid, hydrogenated dimer acid, and dimer acid; aromatic dicarboxylic acids such as phthalic acid, terephthalic acid, isophthalic acid, and naphthalenedicarboxylic acid; alicyclic dicarboxylic acids such as cyclohexanedicarboxylic acid; tricarboxylic acids such as trimellitic acid, trimesic acid, and trimer of castor oil fatty acid; and tetracarboxylic acids such as pyromellitic acid. The ester-forming derivatives of the polycarboxylic acids include, for example, anhydrides of the polycarboxylic acids, halides such as chlorides and bromides of the polycarboxylic acids, lower aliphatic esters such as methyl, ethyl, propyl, isopropyl, butyl, isobutyl, and amyl esters of the polycarboxylic acids. The lactones include γ-caprolactone, δ-caprolactone, ε-caprolactone, dimethyl-ε-caprolactone, δ-valerolactone, γ-valerolactone, γ-butyrolactone.

When a polyesterdiol is used as the diol component of polyol component (b) relating to the present invention, the resultant water-dispersed polyurethane composition is further excellent in water resistance and tensile property, which is preferred. Such polyesterdiol can be obtained from a dicarboxylic acid and a lower-molecular-weight diol. The polyesterdiol preferably has a molecular weight of 500 to 3000 in term of number-average molecular weight.

The water-dispersed polyurethane composition of the present invention is a composition in which a polyurethane obtained by using component (a) and component (b) as essential components is dispersed in water. The polyurethane may be dispersed by forced emulsification using a reactive or nonreactive emulsifier. However, if the polyurethane is spontaneously emulsified by method (1) in which anionic group-introducing compound (c1) and anionic group neutralizer (d1) are additionally used as essential components, method (2) in which cationic group-introducing compound (c2) and cationic group neutralizer (d2) are additionally used as essential components, method (3) in which a polyethylene oxide unit is introduced into the main-chain or side-chain of polyurethane, or a method combining these, the polyurethane is more readily dispersed in water and the composition is further excellent in chemical resistance; thus such method is preferred.

Anionic group-introducing compound (c1) used in method (1) (hereinafter, may be simply called "component (c1)") is a compound used for introducing an anionic group into the polyurethane. The purpose of introducing an anionic group is to impart dispersibility in water to the polyurethane by neutralizing the anionic group with anionic group neutralizer (d1). The anionic group includes carboxyl group, sulfonic acid group, phosphonic acid group, boric acid group. Preferable are carboxyl group and/or sulfonic acid group because of the excellent dispersibility in water and ease in introduction to the polyurethane.

The anionic group-introducing compound (c1) includes, for example, carboxyl group-containing polyols such as dimethylolpropionic acid, dimethylolbutanoic acid (dimethylolbutyric acid), and dimethylolvaleric acid and sulfonic acid group-containing polyols such as 1,4-butanediol-2-sulfonic acid. An anionic group-containing diol is preferably used as anionic group-introducing compound (c1), because the content (number density) of anionic groups introduced is easily adjusted and the workability is good. The amount of anionic group-introducing compound (c1) to be used is preferably 5 to 1000 moles and more preferably 10 to 500 moles relative to 100 moles of the total of the diol component and polyol component present in polyol component (b). If the amount is less than 5 moles, the dispersion stability is sometimes insufficient, while if it is over 1000 moles, the water resistance of coating films and the like obtained from the water-dispersed polyurethane composition is sometimes lowered.

When anionic group-introducing compound (c1) is used, in general, anionic group neutralizer (d1) (hereinafter, simply also called "component (d1)") is used at the same time. Anionic group neutralizer (d1) is a compound that neutralizes the anionic group in anionic group-introducing compound (c1) to impart water dispersibility to the polyurethane. Specific examples thereof include tertiary amines such as trilakylamines including trimethylamine and triethylamine, N,N-dialkylalkanolamines, and N-alkyl-N,N-dialkanolamines and basic compounds such as ammonia, sodium hydroxide, potassium hydroxide, and lithium hydroxide. The amount of anionic group neutralizer (d1) to be used is preferably 0.2 to 2.0 moles and more preferably 0.5 to 1.5 moles per mole of anionic group in anionic group-introducing compound (c1), since significant excess or deficiency of component (d1) is likely to deteriorate water resistance, strength, stretching property, or other properties of coating films and the like obtained from the water-dispersed polyurethane composition.

Cationic group-introducing compound (c2) used in method (2) (hereinafter, may be simply called "component (c2)") is a compound used for introducing a cationic group into the polyurethane. The purpose of introducing an cationic group is to provide polyurethane with dispersibility in water by neutralizing the cationic group with cationic group neutralizer (d2). The cationic group includes secondary amino groups, tertiary amino groups, quaternary ammonium groups, and the like. Tertiary amino groups are preferred because they provide good dispersibility in water and are easily introduced into the polyurethane.

Cationic group-introducing compound (c2) includes, for example, N,N-dialkylalkanolamines, N-alkyl-N,N-dialkanolamines such as N-methyl-N,N-diethanolamine and N-butyl-N,N-diethanolamine, trialkanolamines, and the like. Cationic group-containing diols are preferably used as cationic group-introducing compound (c2), because the content (number density) of cationic groups introduced is easily adjusted and the workability is good. The amount of cationic group-introducing compound (c2) to be used is preferably 5 to 1000 moles and more preferably 10 to 500 moles relative to 100 moles of the total of the diol component and polyol component present in polyol component (b). If the amount is less than 5 moles, the dispersion stability is sometimes insufficient, while if it is over 1000 moles, the water resistance of coating films and the like obtained from the water-dispersed polyurethane composition is sometimes lowered.

When cationic group-introducing compound (c2) is used, in general, cationic group neutralizer (d2) (hereinafter, may be simply called "component (d2)") is used at the same time. Cationic group neutralizer (d2) is a compound that neutralizes the cationic group in cationic group-introducing compound (c2) to provide the polyurethane with water dispersibility. Specific examples thereof include organic carboxylic acids such as formic acid, acetic acid, lactic acid, succinic acid, glutaric acid, and citric acid, organic sulfonic acids such as p-toluenesufonic acid and alkylsulfonic acids, inorganic acids such as hydrochloric acid, phosphoric acid, nitric acid, and sulfonic acid, epoxy compounds such as epihalohydrine, agents for forming quaternary ammonium such as dialkyl sulfates and alkyl halides. The amount of cationic group neutralizer (d2) to be used is preferably 0.2 to 2.0 moles and more preferably 0.5 to 1.5 moles per mole of cationic groups in cationic group-introducing compound (c2), since significant excess or deficiency of component (d2) is likely to deteriorate water resistance, strength, stretching property, or other properties of coating films and the like obtained from the water-dispersed polyurethane composition.

In method (3), polyethylene oxide units are introduced into the main-chain or side-chain of polyurethane by using nonionic group-introducing compound (c3) having a polyethylene oxide unit (hereinafter, may be simply called "component (c3)" or "nonionic group-introducing compound (c3)"). The nonionic group-introducing compound (c3) includes ethylene oxide polyaddition products or ethylene oxide/propylene oxide copolyaddition products of the above low-molecular-weight polyols and other nonionic group-introducing compounds shown below.

Such other nonionic group-introducing compounds include, for example, ethylene oxide polyaddition product or ethylene oxide/propylene oxide copolyaddition product of ammonia or low-molecular-weight amines having two or more active hydrogens such as methylamine, ethylamine, aniline, phenylenediamine, and isophoronediamine; reaction products of a nurate form (trimer) of diisocyanate with polyethylene glycol monoalkyl ether or polyethylene glycol monoalkyl ester; and the like.

Nonionic group-introducing compound (c3) is used in such an amount that the content of polyethylene oxide units in the polyurethane is 1% by mass or more, particularly preferably 1 to 30% by mass and more preferably 3 to 20% by mass. If the content of polyethylene oxide unit in the polyurethane is less than 1% by mass, the dispersion stability is likely to be reduced, whereas a content over 30% by mass sometimes lowers the water resistance of coating films and the like obtained from the water-dispersed polyurethane composition.

As anionic group-introducing compound (c1), cationic group-introducing compound (c2), and nonionic group-introducing compound (c3), two or more compounds may be used in combination for each case. Also, as anionic group neutralizer (d1) and cationic group neutralizer (d2), two or more compounds may be used in combination for each case.

In the water-dispersed polyurethane composition of the present invention, chain extender component (hereinafter, may be simply called "component (e)") may be used as an optional component.

The chain extender component serving as component (e) is exemplified by polyamines including low-molecular-weight diamines with a structure in which alcoholic hydroxyl groups in the above low-molecular-weight diols are substituted with amino groups, such as ethylenediamine and propylenediamine, polyetherdiamines such as polyoxypropylenediamine and polyoxyethylenediamine, alicyclic diamines such as menthenediamine, isophoronediamine, norbomenediamine, bis(4-amino-3-methyldicyclohexyl)methane, diaminodicyclohexylmethane, bis(aminomethyl)cyclohexane, and 3,9-bis(3-aminopropyl)-2,4,8,10-tetraoxaspiro[5.5]undecane, aromatic diamines such as m-xylenediamine, α-(m/p-aminopheny)ethylamine, m-phenylenediamine, diaminodiphenylmethane, diaminodiphenyl sulfone, diaminodiethyldimethyldiphenylmethane, diaminodiethyldiphenylmethane, dimethylthiotoluenediamine, diethyltoluenediamine, and a,a'-bis(4-aminophenyl)-p-diisopropylbenzene; dicarboxylic acid dihyrazides such as adipic acid dihydrazide; 2-(2-aminoethylamino)ethanol; and the like.

The water-dispersed polyurethane composition of the present invention is an aqueous dispersion of a polyurethane formed from component (a) and component (b), preferably together with components (c) and (d) (when component (c3) is used, component (d) is unnecessary), and where necessary component (e) and a crosslinking agent described below. The method for producing the composition is not particularly limited. There may be employed any common production methods for water-dispersed polyurethane compositions. A preferable method for producing the composition includes a prepolymer method in which a prepolymer is synthesized by reacting components (a) and (b), preferably together with components (c) and (d) (when component (c3) is used, component (d) is unnecessary), and where necessary, component (e) and a crosslinking agent described below in a solvent that is inert to the reaction and has good compatibility with water, and then the resulting prepolymer is fed to water to disperse.

The solvent used in the above preferable production method, which is inert to the reaction and has good compatibility with water, includes, for example, acetone, methyl ethyl ketone, dioxane, tetrahydrofuran, N-methyl-2-pyrrolidone. These solvents are typically used in an amount of 3 to 100% by mass relative to the total amount of the starting materials used for the synthesis of a prepolymer. When a solvent with a boiling point of 100°C or lower among the above solvents is used, it is preferred to distill the solvent off under reduced pressure after the synthesis of the prepolymer.

In the water-dispersed polyurethane composition of the present invention, each component may be used in a convenient amount without specific limitation. The amount to be used may be determined based on the amount of functional groups in each component in the reaction involving the component. As for components (a) to (c) as well as component (e) and a crosslinking agent, which are used where necessary, the total amount of isocyanate-reactive groups in component (b), component (c), and if any, component (e) and a crosslinking agent is preferably 0.3 to 2 moles and more preferably 0.5 to 1.5 moles per mole of isocyanate group in component (a).

In the water-dispersed polyurethane composition of the present invention, the solid content may be arbitrarily selected without specific limitation. The solid content is, however, preferably 1 to 60% by mass and more preferably 5 to 40% by mass for improving the dispersibility and the workability in producing coating films, molded articles, or the like.

In the water-dispersed polyurethane composition of the present invention, the water content is preferably 30 to 90% by mass.

In the water-dispersed polyurethane composition of the present invention, there may be used a common crosslinking agent that forms a crosslinking structure in the polyurethane molecule, where necessary. As the preferred crosslinking agent for the water-dispersed polyurethane composition of the present invention, there may be mentioned melamine, monomethylolmelamine, dimethylolmelamine, trimethylolmelamine, tetramethylolmelamine, pentamethylolmelamine, hexamethylolmelamine, methylated methylolmelamine, butylated methylolmelamine, melamine resin, and the like. Among these, especially preferable is melamine because it provides a polyurethane further excellent in dispersibilty and its cost is low. The amount of these crosslinking agents to be used is preferably such that the isocyanate-reactive groups in the crosslinking agent is not more than 0.2 moles per mole of isocyanate groups in component (a).

In the water-dispersed polyurethane composition of the present invention, there may be used a common emulsifier used in water-dispersed polyurethane compositions, where necessary. Such emulsifiers include anionic surfactants, nonionic surfactants, cationic surfactants, amphoteric surfactants, polymer surfactants, reactive surfactants. Among these, preferable are anionic surfactants and nonionic surfactants because of low cost and good emulsifying effects.

The anionic surfactants include alkyl sulfates such as sodium dodecyl sulfate, potassium dodecyl sulfate, and ammonium dodecyl sulfate; salts of polyoxyethylene ether sulfates such as sodium dodecyloxypolyglycol sulfate and ammonium alkylpolyoxyethylene sulfate; sodium sulforicinoleate; alkyl sulfonates such as alkali metal salts of sulfonated paraffin and ammonium salt of sulfonated paraffin; fatty acid salt such as sodium laurate, triethanolamine oleate, and triethanolamine abietate; alkylarylsulfonate such as sodium benzenesulfonate, alkali metal sulfate of alkaliphenolhydroxyethylene; higher alkylnaphthalenesulfonate salts; naphthalenesufonic acid/formalin condensate; salts of dialkyl sulfosuccinate; salts of polyoxyethylene alkyl sulfate, salts of polyoxyethylenealkylaryl sulfate; salts of polyoxyethylene phosphate; alkoxypolyoxyethyleneacetates; salts of N-acylamino acid; salts of N-acylmethyltaurine.

The nonionic surfactants include fatty acid partial esters of polyhydric alcohols such as sorbitan monolaurate and sorbitan monooleate; polyoxyethylene glycol fatty acid esters; polyglycerin fatty acid esters; ethylene oxide- and/or propylene oxide-adducts of alcohol having 1 to 18 carbon atoms; ethylene oxide- and/or propylene oxide-adducts of alkylphenol; ethylene oxide- and/or propylene oxide-adducts of alkylene glycol and/or alkylenediamine.

The alcohols having 1 to 18 carbon atoms that may compose the nonionic surfactants include methanol, ethanol, propanol, 2-propanol, butanol, 2-butanol, t-butanol, amyl alcohol, isoamyl alcohol, t-amyl alcohol, hexanol, octanol, decanol, lauryl alcohol, myristyl alcohol, palmityl alcohol, stearyl alcohol, and the like. The alkylphenols that may compose the nonionic surfactants include phenol, methylphenol, 2,4-di-t-butylphenol, 2,5-di-t-butylphenol, 3,5-di-t-butylphenol, 4-(1,3-tetramethylbutyl)phenol, 4-isooctylphenol, 4-nonylphenol, 4-t-octylphenol, 4-dodecylphenol, 2-(3,5-dimethylheptyl)phenol, 4-(3,5-dimethylheptyl)phenol, naphthol, bisphenol A, bisphenol F. The alkylene glycol that may compose the nonionic surfactants include ethylene glycol, 1,2-propanediol, 1,3-propanediol, 2-methyl-1,3-propanediol, 2-butyl-2-ethyl-1,3-propanediol, 1,4-butanediol, neopentyl glycol, 1,5-pentanediol, 3-methyl-1,5-pentanediol, 2,4-diethyl-1,5-pentanediol, 1,6-hexanediol. The alkylenediamines that may compose the nonionic surfactants include alkylenediamine with a structure in which alcoholic hydroxyl groups in the above alkylene glycols are replaced by amino groups. The ethylene oxide-adducts and propylene oxide-adducts may be either random adducts or block adducts.

When the emulsifier is used, the amount may be arbitrarily selected without limitation. It is preferably 0.01 to 0.3 parts by mass and more preferably 0.05 to 0.2 parts by mass relative to 1 part by mass of the polyurethane. If the amount is smaller than 0.01 parts by mass, dispersibility is sometimes insufficient, whereas if it exceeds 0.3 parts by mass, coating films obtained from the water-dispersed polyurethane composition may be inferior in the physical properties such as water resistance, strength, and stretching property.

Further, water-dispersed polyurethane composition of the present invention may contain common additives, where necessary. The additives include, for example, pigments, dyes, film-forming auxiliaries, hardeners, external crosslinking agents, viscosity modifiers, leveling agents, antifoaming agents, anti-gelatinization agents, dispersion stabilizers such as surfactants, light stabilizers such as hindered amines; antioxidants including phosphorous-containing antioxidants, phenol-type antioxidants, sulfur-containing antioxidants, ultraviolet absorbers including triazines, benzoates, 2-(2-hydroxyphenyl)benzotriazoles, radical scavengers, heat-resistance improvers, inorganic filler, organic filler, plasticizers, lubricants, antistatic agents, reinforcers, catalysts, thixotropic agents, antimicrobial agents, antifungal agents, rust preventives. When the water-dispersed polyurethane composition of the present invention is used as paint or coating agents, there may also be used silane coupling agents, colloidal silica, tetraalkoxysilane or its polycondensate, chelating agents, epoxy compounds, and the like, which provide the composition with particularly strong adhesiveness to substrates.

When the water-dispersed polyurethane composition of the present invention is used as paint or a coating agent, among the above additives, preferably used are hindered amine light stabilizers, ultraviolet absorbers, and antioxidants such as phosphorous compounds, phenols, and sulfur compounds.

The hindered amine light stabilizer includes, for example, 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, bis(1-octoxy-2,2,6,6-tetramethyl-4-piperidyl) sebacate, 1,2,2,6,6-pentamethyl-4-piperidylmethyl methacrylate, 2,2,6,6-tetramethyl-4-piperidylmethyl methacrylate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-bis(tridecyl)-1,2,3,4-butanetetracarboxylate, bis(1,2,2,6,6-pentamethyl-4-piperidyl)-bis(tridecyl)-1,2,3,4-butanetetracarboxylate, bis(1,2,2,6,6-pentamethyl-4-piperidyl)-2-butyl-2-(3,5-di-t-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/dibromoethane polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-t-octylamino-s-triazine polycondensate, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8,12-tetraazadodecane, 1,6,11-tris[2,4-bis(N-butyl-N-(2,2,6,6-tetramethyl-4-piperidyl)amino)-s-triazin-6-ylamino]undecane, 1,6,11-tris[2,4-bis(N-butyl-N-(1,2,2,6,6-pentamethyl-4-piperidyl)amino)-s-triazin-6-ylamino]undecane, 3,9-bis[1,1-dimethyl-2-[tris(2,2,6,6-tetramethyl-4-piperidyloxycarbonyloxy)butylcarbonyloxy]ethyl-2,4,8,10-tetraoxaspiro[5.5]undecane, 3,9-bis[1,1-dimethyl-2-[tris(1,2,2,6,6-pentamethyl-4-piperidyloxycarbonyloxy)butylcarbonyloxy]ethyl-2,4,8,10-tetraoxaspiro[5.5]undecane.

The ultraviolet absorber includes, for example, 2-hydroxybenzophenones such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-t-octylphenyl)benzotriazole, 2-(2-hydroxy-3,5-di-t-butylphenyl)-5-chlorobenzotriazole, 2-(2-hydroxy-3-t-butyl-5-methylphenyl)-5-chlorobenzotriazole, 2-(2-hydroxy-3,5-dicumylphenyl)benzotriazole, 2,2'-methylenebis(4-t-octyl-6-benzotriazolylphenol), polyethylene glycol ester of 2-(2-hydroxy-3-t-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-t-butylphenyl]benzotriazole, 2-[2-hydroxy-3-(2-methacryloyloxyethyl)-5-t-octylphenyl]benzotriazole, 2-[2-hydroxy-3-(2-methacryloyloxyethyl)-5-t-butylphenyl]-5-chlorobenzotriazle, 2-[2-hydroxy-5-(2-methacryloyloxyethyl)phenyl]benzotriazole, 2-[2-hydroxy-3-t-butyl-S-(2-methacryloyloxyethyl)phenyl]benzotriazole, 2-[2-hydroxy-3-t-amyl-5-(2-methacryloyloxyethyl)phenyl]benzotriazole, 2-[2-hydroxy-3-t-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-{2-hydroxy-4-[3-(C₁₂-C₁₃-mixed alkoxy)-2-hydroxypropoxy]phenyl}-4,6-bis(2,4-dimethylphenyl)-1,3,5-triazine, 2-[2-hydroxy-4-(2-acryloyloxyethoxy)phenyl]-4,6-bis(2,4-methylphenyl)-1,3,5-triazine, 2-(2,4-dihydroxy-3-allylphenyl)-4,6-bis(2,4-dimethylphenyl)-1,3,5-triazine, and 2,4,6-tris(2-hydroxy-3-methyl-4-hexyloxyphenyl)-1,3,5-triazine; benzoates such as phenyl salicylate, resorcinol monobenzoate, 2,4-di-t-butylphenyl-3,5-di-t-butyl-4-hydroxybenzoate, octyl (3,5-di-t-butyl-4-hydroxy)benzoate, dodecyl (3,5-di-t-butyl-4-hydroxy)benzoate, tetradecyl (3,5-di-t-butyl-4-hydroxy)benzoate, hexadecyl (3,5-di-t-butyl-4-hydroxy)benzoate, octadecyl (3,5-di-t-butyl-4-hydroxy)benzoate, and behenyl (3,5-di-t-butyl-4-hydroxy)benzoate; substituted oxanilides such as 2-ethyl-2'-ethoxyoxanilide and 2-ethoxy-4'-dodecyloxanilide; cyanoacrylates such as ethyl α-cyano-β,β-diphenylacrylate and methyl 2-cyano-3-methyl-3-(p-methoxyphenyl)acrylate; metal salts or metal chelates, especially salts or chelates of nickel or chromium.

Phosphorous compound used as the antioxidants include, for example, triphenyl phosphite, tris(2,4-di-t-butylphenyl) phosphite, tris(2,5-di-t-butylphenyl) phosphite, tris(nonylphenyl) phosphite, tris(dinonylphenyl) phosphite, tris(mono-/di-mixed nonylphenyl) phosphite, diphenyl acid phosphite, 2,2'-methylenebis(4,6-di-t-butylphenyl) octyl phosphite, diphenyl decyl phosphite, diphenyl octyl phosphite, di(nonylphenyl) pentaerythritol diphosphite, phenyl diisodecyl phosphite, tributyl phosphite, tris(2-ethylhexyl) phosphite, tridecyl phosphite, trilauryl phosphite, dibutyl acid phosphite, dilauryl acid phosphite, trilauryl trithiophosphite, bis(neopentylglycol)-1,4-cyclohexanedimethyl diphosphite, bis(2,4-di-t-butylphenyl) pentaerythritol diphosphite, bis(2,5-di-t-butylphenyl) pentaerythritol diphosphite, bis(2,6-di-t-butyl-4-methylphenyl) pentaerythritol diphosphite, bis(2,4-dicumylphenyl) pentaerythritol diphosphite, distearyl pentaerythritol diphosphite, tetra(C₁₂-C₁₅-mixed alkyl)-4,4'-isopropylidenediphenyl diphosphite, bis[2,2'-methylenebis(4,6-diamylphenyl)] isopropylidenediphenyl diphosphite, tetra(tridecyl)-4,4'-butylidenebis(2-t-butyl-5-methylphenol) diphosphite, hexa(tridecyl)1,1,3-tris(2-methyl-5-t-butyl-4-hydroxyphenyl)butane-triphosphite, tetrakis(2,4-di-t-butylphenyl) biphenylenediphosphonite, tris(2-[(2,4,7,9-tetrakis-t-butyldibenzo[d,f][1,3,2]dioxaphosphepin-6-yl)oxy]ethyl)amine, 9,10-dihydro-9-oxa-10-phosphaphenanthrene-10-oxide, 2-butyl-2-ethylpropanediol 2,4,6-tri-t-butylphenol monophosphite.

Phenols used as the antioxidants include, for example, 2,6-di-t-butyl-p-cresol, 2,6-diphenyl-4-octadecyloxyphenol, stearyl (3,5-di-t-butyl-4-hydroxyphenyl)propionate, distearyl (3,5-di-t-butyl-4-hydroxybenzyl)phosphonate, tridecyl- 3,5-di-t-butyl-4-hydroxybenzylthioacetate, thiodiethylenebis[(3,5-di-t-butyl-4-hydroxyphenyl) propionate], 4,4'-thiobis(6-t-butyl-m-cresol), 2-octylthio-4,6-di(3,5-dit-butyl-4-hydroxyphenoxy)-s-triazine, 2,2'-methylenebis(4-methyl-6-t-butylphenol), bis[3,3-bis(4-hydroxy-3-t-butylphenyl)butyric acid] glycol ester, 4,4'-butylidenebis(2,6-di-t-butylphenol), 4,4'-butylidenebis(6-t-butyl-3-methylphenol), 2,2'-ethylidenebis(4,6-di-t-butylphenol), 1,1,3-tris(2-methyl-4-hydroxy-5-t-butylpheny)butane, bis[2-t-butyl-4-methyl-6-(2-hydroxy-3-t-butyl-5-methylbenzyl)phenyl] terephthalate, 1,3,5-tris(2,6-dimethyl-3-hydroxy-4-t-butylbenzyl) isocyanurate, 1,3,5-tris(3,5-di-t-butyl-4-hydroxybenzyl) isocyanurate, 1,3,5-tris(3,5-di-t-butyl-4-hydroxybenzyl)-2,4,6-trimethylbenzene, 1,3,5-tris[(3,5-di-t-butyl-4-hydroxyphenyl)propionyloxyethyl] isocyanurate, tetrakis[3-(3',5'-di-t-butyl-4'-hydroxyphenyl)propionyloxymethyl]methane, 2-t-butyl-4-methyl-6-(2-acroyloxy-3-t-butyl-5-methylbenzyl)phenol, 3,9-bis[2-(3-t-butyl-4-hydroxy-5-methylhydrocinnamoyloxy)-1,1-dimethylethyl]-2,4,8,10-tetraoxaspiro[5.5]undecane, triethylene glycol bis[β-(3-t-butyl-4-hydroxy-5-methylphenyl)propionate], and the like.

Sulfur compounds used as the antioxidants include, for example, dialkyl thiodipropionates such as dilauryl-, dimyristyl-, myristyl stearyl-, or distearyl ester of thiodipropionic acid; and β-alkylmercaptopropionate esters of polyol such as pentaerythritol tetra(β-dodecylmercaptopropionate).

The amount of each of the hindered amine light stabilizer, ultraviolet absorber, and antioxidant to be used is preferably 0.01 to 10 parts by mass and more preferably 0.01 to 5 parts by mass relative to 100 parts by mass of the solid content in the water-dispersed polyurethane composition of the present invention. With addition in an amount less than 0.001 parts by mass, the effect may be insufficient, whereas addition more than 10 parts by mass may affect the dispersibility or coating properties. As methods for adding these hindered amine-based light stabilizers, ultraviolet absorbers, and antioxidants, there may be mentioned addition to polyol component (b), addition to a prepolymer, addition to an aqueous phase in dispersing a prepolymer in water, addition after dispersing a prepolymer in water. Preferred methods are addition to polyol component (b) and addition to a prepolymer because of ease in operation.

Applications of the water-dispersed polyurethane composition of the present invention include paint, an adhesive, a surface modifier, a binder for organic powder and/or inorganic powder, a molded article specifically, a binder for glass fiber, a coating agent for thermal paper, a coating agent for inkjet paper, a binder for printing ink, paint for steel plates, a coating agent for agricultural films, paint for inorganic construction material such as glass, slate, and concrete, paint for wood, a treating agent for fiber, a coating agent for fiber, a coating agent for electronic parts materials, sponge, puff, gloves, condom. Among these applications, the water-dispersed polyurethane composition of the present invention may be especially suitably used as paint for steel plates, glass, or wood and a coating agent for paper, fiber, or electronic parts materials; and above all, suitably used as paint for surface-treated steel plates.

When the water-dispersed polyurethane composition of the present invention is used as paint, it may be applied to a substrate by a suitable method, for example, coating with a brush, roller coating, spray coating, gravure coating, reverse roll coating, air knife coating, bar coating, curtain roll coating, dip coating, rod coating, doctor blade coating.

### Examples

Hereinafter, the water-dispersed polyurethane composition of the present invention is described in more detail with reference to Examples, but the present invention is not limited by these examples.

Examples 1 to 3 and 6 illustrate examples of anionic water-dispersed polyurethane compositions containing component (c1) and component (d1), Example 4 illustrates an example of nonionic water-dispersed polyurethane composition containing component (c3), and Example 5 illustrates an example of a cationic water-dispersed polyurethane composition containing component (c2) and component (d2). Comparative Examples 1 to 3 deal with water-dispersed polyurethane compositions without using any isocyanate represented by general formula (I). The water-dispersed polyurethane compositions of Comparative Examples 1 and 2 are anionic while the water-dispersed polyurethane composition of Comparative Example 3 is nonionic.

### [Example 1]

### Synthesis of intermediate raw material PP-B (Isocyanate represented by general formula (I))

To a reaction flask were charged 575 g (1.0 mol) of nurate form of 1,6-hexamethylene diisocyanate (NCO-equivalent: 190) and 270 g (1.0 mol) of stearyl alcohol (n-octadecanol), and the reaction was conducted under nitrogen at 115 to 120°C for 2 hours. The NCO% was found to be 9.98%, and thus intermediate raw material PP-B was obtained.

### Synthesis of polyurethane resin composition PP-01 (Prepolymer)

To a reaction flask were charged 300 g (0.30 mol) of a polyesterdiol with a number-average molecular weight of 1000 obtained from adipic acid and neopentyl glycol, 12.6 g (0.10 mol) of melamine, 288 g (1.10 mol) of dicyclohexylmethane-4,4'-diisocyanate (hydrogenated MDI), 79.5 g (0.09 mol) of intermediate raw material PP-B, and 161 g of N-methylpyrrolidone as a solvent. When the reaction was conducted under nitrogen at 100 to 120°C for 2.5 to 3.0 hours, the NCO% was found to become 8.57%. To the reaction mixture were added 39.6 g (0.33 mol) of dimethylolpropionic acid and 161 g of N-methylpyrrolidone, and the reaction was conducted at 100 to 120°C for 2.5 to 3.0 hours. At that time, the NCO% became 3.5%. Here were added 1.6 g of Tinuvin 328 (ultraviolet absorber, manufactured by Ciba Speciality Chemicals Co., Ltd.) and 3.2 g of AO-60 (phenol-type antioxidant, manufactured by Asahi Denka Co., Ltd.), the reaction was conducted at 50 to 60°C for 30 minutes, 33.3 g (0.33 mol) of triethylamine was added to the mixture, and the reaction was performed at 50 to 60°C for 30 minutes to obtain polyurethane resin composition PP-01.

### Latex formation

An aqueous solution was prepared by adding 1.0 g of SE-21 (silicone-type antifoaming agent, manufactured by Wacker Asahikasei Silicone Co., Ltd.) and 5.45 g (0.054 mol) of triethylamine to 580 g of water, and here was added 500 g of polyurethane resin composition PP-01 obtained above (60 to 65°C) while the solution was stirred, and the resultant mixture was stirred at 20 to 40°C for 15 minutes. Then, here was added dropwise 28.8 g of a mixture of ethylenediamine and water (1/3 by mass), the resultant mixture was stirred at 20 to 40°C for 10 minutes, a liquid mixture of 3.48 g (0.02 mol) of adipic acid dihydrazide and 11.6 g of water was added, and the resultant mixture was stirred at 20 to 40°C for 1 hour. The stirring was continued until the NCO group disappeared to obtain water-dispersed polyurethane composition U-01.

### [Example 2]

### Synthesis of polyurethane resin composition PP-02 (Prepolymer)

To a reaction flask were charged 280 g (0.28 mol) of a polyesterdiol having a number-average molecular weight of 1000 obtained from terephthalic acid and methylpentanediol, 11.8 g (0.094 mol) of melamine, 37.2 g (0.31 mol) of dimethylolpropionic acid, 547.6 g (2.09 mol) of hydrogenated MDI, 139.2 g (0.16 mol) of intermediate raw material PP-B, and 297 g of N-methylpyrrolidone as a solvent. When the reaction was conducted under nitrogen at 110 to 120°C for 2.5 to 3.0 hours, the NCO% was found to be 3.8%. The mixture was cooled to 70 to 80°C, here were added 1.9 g of benzotriazole and 6.8 g of A-1100 (amino group-containing silane, manufactured by Nippon Unicar Company Limited), and the reaction was performed at 70 to 80°C for 30 minutes. The reaction mixture was cooled to 60 to 70°C, 31.3 g (0.31 mol) of triethylamine was added, and the reaction was performed at 60 to 70°C for 30 minutes to obtain polyurethane resin composition PP-02.

### Latex formation

To 1071 g of water at 20 to 25°C were added 1.1 g of SE-21 (silicone-type antifoaming agent, manufactured by Wacker Asahikasei Silicone Co., Ltd.) and 5.25 g (0.052 mol) of triethylamine to prepare an aqueous solution, to which 869 g of polyurethane resin composition PP-02 obtained above (60 to 70°C) was added slowly enough to keep the temperature of reaction system below 40°C while the solution was stirred. After addition, the mixture was stirred at 20 to 40°C for 30 minutes, here was gradually added dropwise 56.4 g of 25-mass% aqueous ethylenediamine (ethylenediamine: 14.4 g (0.24 mol)), and the resultant mixture was stirred at 20 to 40°C for 30 minutes. Here was added a liquid mixture of 9.9 g (0.057 mol) of adipic acid dihydrazide and 30 g of water, and the resultant mixture was stirred at 20 to 40°C for 1 hour to obtain water-dispersed polyurethane composition U-02.

### [Comparative Example 1]

### Synthesis of polyurethane resin composition PP-03 (Prepolymer)

To a reaction flask were charged 300 g (0.30 mol) of a polyesterdiol having a number-average molecular weight of 1000 obtained from adipic acid and neopentyl glycol, 12.6 g (0.10 mol) of melamine, 319 g (1.22 mol) of hydrogenated MDI, and 144 g of N-methylpyrrolidone as a solvent. When the reaction was conducted under nitrogen at 100 to 120°C for 2.5 to 3.0 hours, the NCO% was found to be 8.4%. To this mixture were added 39.6 g (0.33 mol) of dimethylolpropionic acid and 144 g of N-methylpyrrolidone, and the reaction was performed at 100 to 120°C for 2.5 to 3.0 hours. The NCO% was found to become 3.9%. To the reaction mixture were added 1.6 g of Tinuvin 328 (ultraviolet absorber, manufactured by Ciba Speciality Chemicals Co., Ltd.) and 3.2 g of AO-60 (phenol-type antioxidant, manufactured by Asahi Denka Co., Ltd.), and the reaction was performed at 50 to 60°C for 30 minutes, and then 33.3 g (0.33 mol) of triethylamine was added and the reaction was performed for 30 minutes to obtain polyurethane resin composition PP-03.

### Latex formation

An aqueous solution was prepared by adding 1.0 g of SE-21 (silicone-type antifoaming agent, manufactured by Wacker Asahikasei Silicone Co., Ltd.) and 6.1 g (0.06 mol) of triethylamine to 580 g of water, and here was added 500 g of polyurethane resin composition PP-03 (60 to 65°C) obtained above while the solution was stirred. The mixture was stirred at 20 to 40°C for 15 minute, here was added dropwise 28.8 g of a mixture of ethylenediamine and water (1/3 by mass), and the resultant mixture was stirred at 20 to 40°C for 10 minutes. To this mixture were added a liquid mixture of 3.48 g (0.02 mol) of adipic acid dihydrazide and 11.6 g of water, and the resultant mixture was stirred at 20 to 40°C for 1 hour. The stirring was continued until the NCO group disappeared to obtain water-dispersed polyurethane composition U-03.

### [Comparative Example 2]

### Synthesis of polyurethane resin composition PP-04 (Prepolymer)

To a reaction flask were charged 300 g (0.30 mol) of a polyesterdiol having a number-average molecular weight of 1000 obtained from terephthalic acid and methylpentanediol, 12.6 g (0.10 mol) of melamine, 39.6 g (0.33 mol) of dimethylolpropionic acid, 639 g (2.44 mol) of hydrogenated MDI, and 287 g of N-methylpyrrolidone as a solvent, and the reaction was performed under nitrogen at 110°C to 120°C for 2.5 to 3.0 hours, when the NCO% was found to become 4.3%. The reaction mixture was cooled to 70 to 80°C and here were added 2.0 g of benzotriazole and 7.1 g of A-1100 (amino group-containing silane, manufactured by Nippon Unicar Company Limited) and the reaction was performed at 70 to 80°C for 30 minutes. The reaction mixture was cooled to 60 to 70°C, 33.3 g (0.33 mol) of triethylamine was added, and the reaction was performed at 60 to 70°C for 30 minutes to obtain polyurethane resin composition PP-04.

### Latex formation

To 1028 g of water at 20 to 25°C were added 1.1 g of SE-21 (silicone-type antifoaming agent, manufactured by Wacker Asahikasei Silicone Co., Ltd.) and 5.45 g (0.054 mol) of triethylamine to prepare an aqueous solution, to which was added 869 g of polyurethane resin composition PP-04 (60 to 70°C) obtained above slowly enough to keep the temperature of reaction system below 40°C while the solution was stirred. After the addition, the mixture was stirred at 20 to 40°C for 30 minutes, here was gradually added dropwise 56.5 g of 25-mass% of aqueous ethylenediamine (ethylenediamine: 14.4 g (0.24 mol)), and the mixture was stirred at 20 to 40°C for 30 minutes. Here was added a liquid mixture of 9.9 g (0.057 mol) of adipic acid dihydrazide and 30 g of water, and the resultant mixture was stirred at 20 to 40°C for 1 hour to obtain water-dispersed polyurethane composition U-04.

### [Example 3]

### Synthesis of intermediate raw material PP-C (Isocyanate represented by general formula (I))

To a reaction flask were charged 575 g (1.0 mol) of nurate form of 1,6-hexane diisocyanate (NCO-equivalent: 190) and 270 g (1.0 mol) of isostearyl alcohol, and the reaction was conducted under nitrogen at 115 to 120°C for 2 hours. The NCO% was found to become 9.98%, and thus intermediate raw material PP-C was obtained.

### Synthesizing polyurethane resin composition PP-05 (Prepolymer)

To a reaction flask were charged 280 g (0.28 mol) of a polyesterdiol having a number-average molecular weight of 1000 obtained from terephthalic acid and methylpentanediol, 11.8 g (0.098 mol) of melamine, 37.2 g (0.31 mol) of dimethylolpropionic acid, 547 g (2.09 mol) of hydrogenated MDI, 139 g (0.16 mol) of intermediate raw material PP-C, and 297 g of N-methylpyrrolidone as a solvent. When the reaction was preformed under nitrogen at 110 to 120°C for 2.5 to 3.0 hours, the NCO% was found to become 3.8%. The mixture was cooled to 70 to 80°C, here were added 1.9 g of benzotriazole and 6.8 g of A-1100 (amino group-containing silane, manufactured by Nippon Unicar Company Limited), and the reaction was performed at 70 to 80°C for 30 minutes. The resulting mixture was cooled to 60 to 70°C, and 31.3 g (0.31 mol) of triethylamine was added, and the reaction was performed at 60 to 70°C for 30 minutes to obtain polyurethane resin composition PP-05.

### Latex formation

To 1071 g of water at 20 to 25°C were added 1.1 g of SE-21 (silicone-type antifoaming agent, manufactured by Wacker Asahikasei Silicone Co., Ltd.) and 5.25 g (0.052 mol) of triethylamine to prepare an aqueous solution, to which was added 869 g of polyurethane resin composition PP-05 (60 to 70°C) obtained above slowly enough to keep the temperature of reaction system below 40°C while the solution was stirred. After the addition, the mixture was stirred at 20 to 40°C for 30 minutes, here was gradually added dropwise 56.4 g of 25-mass% aqueous ethylenediamine (ethylenediamine: 14.4 g (0.24 mol)), and the resultant mixture was stirred at 20 to 40°C for 30 minutes. To this mixture was added a liquid mixture of 9.9 g (0.057 mol) of adipic acid dihydrazide and 30 g of water, and the mixture was stirred at 20 to 40°C for 1 hour to obtain water-dispersed polyurethane composition U-05.

### [Example 4]

### Synthesis of intermediate raw material PP-D [Nonionic group-introducing compound (c3)]

To a reaction flask were charged 575 g (1.0 mol) of nurate form of 1,6-hexane diisocyanate (NCO-equivalent: 190) and 1000 g (1.0 mol) of polyethylene glycol monomethyl ether (weight-average molecular weight: 1000). When the reaction was performed under nitrogen at 115 to 120°C for 2 hours, the NCO% was found to be 5.3%, and thus intermediate raw material PP-D was obtained.

### Synthesis of nonionic water-dispersed polyurethane composition U-06

To a reaction flask were charged 202.7 g (0.203 mol) of a polyesterdiol having a number-average molecular weight of 1000 obtained from terephthalic acid and methylpentanediol, 47.1 g (0.40 mol) of methylpentanediol, 205.9 g (0.786 mol) of dicyclohexylmethane-4,4'-diisocyanate (hydrogenated MDI), 72.3 g (0.09 mol) of intermediate raw material PP-B, 152.3 g (0.1 mol) of intermediate raw material PP-D, and 184.8 g of N-methylpyrrolidone as a solvent. When the reaction was performed under nitrogen at 100°C to 120°C for 3.0 hours, the NCO% was found to become 4.0%. To this mixture was added 1.6 g of A-1100 (silane coupling agent, manufactured by Dow Corning Toray Co., Ltd.), the reaction was performed at 60 to 80°C for 1 hour, and here were added 1068 g of water and 1.0 g of Adecanate B-1016 (silicone-type antifoaming agent, manufactured by Asahi Denka Co., Ltd.). The mixture was cooled to 30°C, here was added 32.2 g of a mixture of ethylenediamine and water (1/3) dropwise, the resultant mixture was stirred at 20 to 40°C for 10 minutes, here was added a liquid mixture of 24.8 g (0.095 mol) of adipic acid dihydrazide and 74.4 g of water, and the resultant mixture was stirred at 20 to 40°C for 1 hour. The stirring was continued until the NCO group disappeared to obtain water-dispersed polyurethane composition U-06.

### [Comparative Example 3]

### Synthesis of nonionic water-dispersed polyurethane composition U-07

To a reaction flask were charged 202.7 g (0.203 mol) of a polyesterdiol having a number-average molecular weight of 1000 obtained from terephthalic acid and methylpentanediol, 47.1 g (0.40 mol) of methylpentanediol, 228.3 g (0.871 mol) of dicyclohexylmethane-4,4'-diisocyanate (hydrogenated MDI), 152.3 g (0.1 mol) of intermediate raw material PP-D, and 105 g of N-methylpyrrolidone as a solvent. When the reaction was performed under nitrogen at 100°C to 120°C for 3.0 hours, the NCO% was found to become 4.5%. To this mixture was added 1.6 g of A-1100 (silane coupling agent, manufactured by Dow Corning Toray Co., Ltd.), the reaction was performed at 60 to 80°C for 1 hour, and here were added 1068 g of water and 1.0 g of Adecanate B-1016 (silicone-type antifoaming agent, manufactured by Asahi Denka Co., Ltd.). After the mixture was cooled to 30°C, here was added dropwise 32.2 g of a liquid mixture of ethylenediamine and water (1/3), and the mixture was stirred at 20 to 40°C for 10 minutes. To this mixture was added a liquid mixture of 24.8 g (0.095 mol) of adipic acid dihydrazide and 74.4 g of water, and the resultant mixture was stirred at 20 to 40°C for 1 hour. The stirring was continued until the NCO group disappeared to obtain water-dispersed polyurethane composition U-07.

### [Example 5]

### Synthesis of cationic water-dispersed polyurethane composition U-08

To a reaction flask were charged 127.2 g (0.127 mol) of a polyesterdiol having a number-average molecular weight of 1000 obtained from terephthalic acid and methylpentanediol, 5.7 g (0.043 mol) of trimethylolpropane, 143.9 g (0.549 mol) of dicyclohexylmethane-4,4'-diisocyanate (hydrogenated MDI), 51.3 g (0.077 mol) of intermediate raw material PP-B, 24.9 g (0.21 mol) of N-methyl-N,N-diethanolamine, and 51.3 g of N-methylpyrrolidone as a solvent. When the reaction was conducted under nitrogen at 100°C to 120°C for 3.0 hours, the NCO% was found to become 3.8%. To this mixture were added 0.9 g of benzotriazole and 3.1 g of A-1100 (silane coupling agent, manufactured by Dow Corning Toray Co., Ltd.), the reaction was performed at 60 to 80°C for 1 hour, here was added 35.2 g (0.587 mol) of acetic acid, and the mixture was stirred for 30 minutes. To this mixture were added 660 g of water and 1.0 g of Adecanate B-1016 (silicone-type antifoaming agent, manufactured by Asahi Denka Co., Ltd.), the resulting mixture was cooled to 30°C. To this mixture was added a liquid mixture of 17.7 g (0.068 mol) of adipic acid dihydrazide and 53.1 g of water, and the resultant mixture was stirred at 20 to 40°C for 1 hour and then at 60°C for 1 hour. The stirring was continued until the NCO group disappeared to obtain water-dispersed polyurethane composition U-08.

### [Example 6]

### Synthesis of polyurethane resin composition PP-09 (Prepolymer)

To a reaction flask were charged 280 g (0.28 mol) of a polyesterdiol having a number-average molecular weight of 1000 obtained from terephthalic acid and methylpentanediol, 11.8 g (0.094 mol) of melamine, 37.2 g (0.31 mol) of dimethylolpropionic acid, 547.6 g (2.09 mol) of hydrogenated MDI, 139.2 g (0.16 mol) of intermediate raw material PP-B, and 297 g of methyl ethyl ketone as a solvent. When the mixture was reacted under nitrogen at 110°C to 120°C for 2.5 to 3.0 hours, the NCO% was found to become 3.8%. After cooling to 70 to 80°C, to the reaction mixture were added 1.9g of benzotriazole and 6.8g of A-1100 (amino group-containing silane, manufactured by Nippon Unicar Company Limited), and the reaction was performed at temperature of 70 to 80°C for 30 minutes. The mixture was cooled to 60 to 70°C, here was added 31.3 g (0.31 mol) of triethylamine, and the reaction was performed at 60 to 70°C for 30 minutes to obtain polyurethane resin composition PP-09.

### Latex formation

To 1071 g of water at 20 to 25°C were added 1.1 g of B-1016 (silicone-type antifoaming agent, manufactured by Asahi Denka Co., Ltd.) and 5.25 g (0.052 mol) of triethylamine to prepare an aqueous solution, to which was added 869 g of polyurethane resin composition PP-09 (60 to 70°C) obtained above slowly enough to keep the temperature of reaction system below 40°C while the solution was stirred. After the addition, the mixture solution was stirred at 20 to 40°C for 30 minutes, here was gradually added dropwise 56.4 g of 25-mass% of aqueous ethylenediamine (ethylenediamine: 14.4 g (0.24 mol)), and the mixture was stirred at 20 to 40°C for 30 minutes. Then here was added a liquid mixture of 9.9 g (0.057 mol) of adipic acid dihydrazide and 30 g of water, the resultant mixture was stirred at 20 to 40°C for 1 hour, methyl ethyl ketone was distilled off under reduced pressure, and 297 g of water was added to obtain water-dispersed polyurethane composition U-09 having a solid content of 30%.

### [Test Example]

The following evaluations were performed for the water-dispersed polyurethane compositions obtained by Examples and Comparative Examples.

### <Curing Property>

The water-dispersed polyurethane compositions were applied in a thickness of 20 µm onto a surface-treated steel plate and the tackiness was examined at 80°C to rate in the following scale.
5: Tack free
4: Slightly sticky
3: Sticky
2: Largely sticky
1: Not cured

### <Adhesiveness>

The water-dispersed polyurethane composition was applied in a thickness of 1 µm onto an untreated electrogalvanized steel plate and dried while heated in an atmosphere at 300°C for 15 seconds so that the temperature of the steel plate was 150°C to obtain a specimen. The coating film on the specimen was crosscut and tried to peel using a tape to rate the degree of peeling-off in the following scale.
5: No abnormality is observed in the coating film.
4: In slight part (area not more than 5%) the coating film is lifted.
3: In small part (area more than 5% and not more than 20%) the coating film is lifted.
2: In large part (area over 20%) the coating film is lifted.
1: The coating film is completely peeled off.

### <Water Resistance>

The water-dispersed polyurethane composition was applied in a thickness of 1 µm onto an untreated electrogalvanized steel plate and dried while heated in an atmosphere at 300°C for 15 seconds so that the temperature of the steel plate was 150°C to obtain a specimen. The specimen was immersed in warm water at 40°C for 1 hour and the state of the coating film was rated in the following scale.
5: No abnormality is observed in the coating film.
4: In slight part (area not more than 5%) the coating film is lifted.
3: In small part (area more than 5% and not more than 20%) the coating film is lifted.
2: In large part (area over 20%) the coating film is lifted.
1: The coating film is completely peeled off.

### <Alkali Resistance>

The water-dispersed polyurethane composition was applied in a thickness of 1 µm onto an untreated electrogalvanized steel plate and dried while heated in an atmosphere at 300°C for 15 seconds so that the temperature of the steel plate was 150°C to obtain a specimen. The specimen was immersed in an aqueous solution (pH 12) at 60°C for 10 minutes and the state of the coating film was rated in the following scale.
5: No abnormality is observed in the coating film.
4: In slight part (area not more than 5%) the coating film is lifted.
3: In small part (area more than 5% and not more than 20%) the coating film is lifted.
2: In large part (area over 20%) the coating film is lifted.
1: The coating film is completely peeled off.

### <Weather Resistance>

The water-dispersed polyurethane composition was applied in a thickness of 20 µm onto a surface-treated steel plate and kept for 1 day to form a cured coating film. The cured coating film was further dried while heated at 120°C for 1 hour to obtain a specimen. The degradation of the specimen was promoted with a xenon weatherometer for 30 hours and then the state of the coating film was rated in the following scale.
5 : No abnormality is observed in the coating film.
4: In slight part (area not more than 5%) the coating film is lifted.
3: In small part (area more than 5% and not more than 20%) the coating film is lifted.
2: In large part (area over 20%) the coating film is lifted:
1: The coating film is completely peeled off.

### <Corrosion Resistance>

A composition obtained by mixing 100 parts by mass of colloidal silica relative to 100 parts by mass of the water-dispersed polyurethane composition was applied in a thickness of 1 µm onto an untreated electrogalvanized steel plate and dried while heated in an atmosphere at 300°C for 15 seconds so that the temperature of the steel plate was 150°C to obtain a specimen. The SST (saline spray test) was conduced for the specimen and the occurrence of white rust in the specimen were rated in the following scale at 24 and 48 hours.
5: White rust incidence is less than 5%.
4: White rust incidence is not less than 5% and less than 20%.
3: White rust incidence is not less than 20% and less than 50%.
2: White rust incidence is not less than 50% and less than 80%.
1: White rust incidence is more than 80%.

### <Friction Coefficient>

The water-dispersed polyurethane composition was applied in a thickness of 1 µm onto an untreated electrogalvanized steel plate and dried while heated in an atmosphere at 300°C for 15 seconds so that the temperature of the steel plate was 150°C to obtain a specimen. The friction coefficient of the coating film in the specimen was measured using a friction coefficient measurement apparatus (manufactured by Heidon).

### <Contact Angle>

The water-dispersed polyurethane composition was applied in a thickness of 1 µm onto an untreated electrogalvanized steel plate and dried while heated in an atmosphere at 300°C for 15 seconds so that the temperature of the steel plate was 150°C to obtain a specimen. The contact angles of water and oil on the coating film in the specimen were measured using a contact angle meter (manufactured by Kyowa Interface Science, Co. Ltd.).

These results are shown in Tables 1 and 2.

**[Table 1]**

| | | | Examples | | | Comparative Examples | |
|---|---|---|---|---|---|---|---|
| | | | 1 | 2 | 3 | 1 | 2 |
| Water-dispersed polyurethane composition | | | U-01 | U-02 | U-05 | U-03 | U-04 |
| Performance evaluation | Curing property | | 5 | 5 | 4 | 5 | 5 |
| | Adhesiveness | | 5 | 5 | 5 | 5 | 5 |
| | Water resistance | | 5 | 5 | 5 | 3 | 3 |
| | Alkali resistance | | 5 | 5 | 5 | 5 | 5 |
| | Weather resistance | | 5 | 5 | 5 | 3 | 3 |
| | Corrosion resistance | 24 hours | 5 | 5 | 5 | 1 | 2 |
| | | 48 hours | 4 | 5 | 4 | 1 | 1 |
| | Friction coefficient | | 0.23 | 0.25 | 0.3 | 0.36 | 0.4 |
| | Contact angle | Water | 106 | 90 | 85 | 72 | 70 |
| | | Rape oil | 50 | 35 | 30 | 20 | 15 |

**[Table 2]**

| | | | Examples | | | Comparative Examples |
|---|---|---|---|---|---|---|
| | | | 4 | 5 | 6 | 3 |
| Water-dispersed polyurethane composition | | | U-06 | U-08 | U-09 | U-07 |
| Performance evaluation | Curing property | | 5 | 5 | 5 | 5 |
| | Adhesiveness | | 5 | 5 | 5 | 5 |
| | Water resistance | | 4 | 5 | 5 | 1 |
| | Alkali resistance | | 4 | 5 | 5 | 2 |
| | Weather resistance | | 5 | 4 | 5 | 5 |
| | Corrosion resistance | 24 hours | 3 | 5 | 5 | 1 |
| | | 48 hours | 2 | 4 | 5 | 1 |
| | Friction coefficient | | 0.22 | 0.2 | 0.28 | 0.45 |
| | Contact angle | Water | 105 | 95 | 92 | 60 |
| | | Rape oil | 50 | 30 | 38 | 20 |

As is clearly seen in Tables 1 and 2, for the water-dispersed polyurethane compositions (Comparative Examples 1, 2 and 3), which were water-dispersed polyurethane compositions using a polyisocyanate component, a polyol component, and water but were prepared by using an isocyanate other than the isocyanate represented by general formula (I) as the polyisocyanate component, the coating films formed therefrom were inferior in water resistance, weather resistance, corrosion resistance, water repellency, oil repellency, and the like.

On the contrary, the water-dispersed polyurethane compositions (Examples 1 to 6) of the present invention, which contained polyisocyanate component (a), polyol component (b), and water as the essential components and were obtained by using the isocyanate represented by general formula (I) as polyisocyanate component (a), were excellent in curing property and adhesiveness to a substrate, and the coating films formed therefrom were excellent in performances such as water resistance, alkali resistance, weather resistance, corrosion resistance, water repellency, and oil repellency, clearly indicating that the compositions are suitable as paint for steel plates.

Particularly, it is clear that the anionic water-dispersed polyurethane compositions (Examples 1 to 3 and 6), in which anionic group-introducing compound (c1) and anionic group neutralizer (d1) are additionally used together with the above essential components, and the cationic water-dispersed polyurethane composition (Example 5), in which cationic group-introducing compound (c2) and cationic group neutralizer (d2) are additionally used, are significantly excellent in improving effect on corrosion resistance.

### Industrial Applicability

The water-dispersed polyurethane composition of the present invention can provide a coating film excellent in adhesiveness, water resistance, corrosion resistance, heat resistance, weather resistance, water repellency, oil repellency, and can be suitably used as paint, especially as paint for surface-treated steel plates.

## Claims

1. A water-dispersed polyurethane composition comprising a polyisocyanate component (a), a polyol component (b), and water as essential components, wherein, at least, an isocyanate represented by general formula (I) below is used as the polyisocyanate component (a): 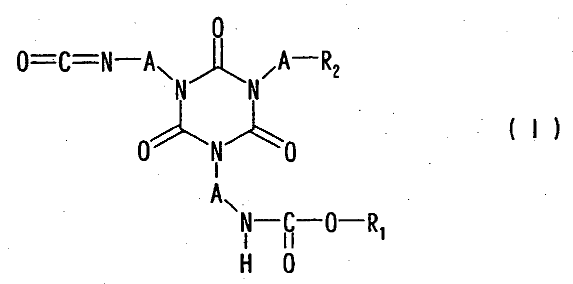 wherein R₁ represents an alkyl group having 10 to 30 carbon atoms, R₂ represents - N=C=O or NH-C(=O)-O-R₁, and A represents a residue other than two -N=C=O groups derived from a diisocyanate.

2. The water-dispersed polyurethane composition according to claim 1, wherein A in general formula (I) above is the residue other than two -N=C=O groups derived from 1,6-hexamethylene diisocyanate.

3. The water-dispersed polyurethane composition according to claims 1 or 2, wherein dicyclohexylmethane-4,4'-diisocyanate is additionally used as the polyisocyanate component (a).

4. The water-dispersed polyurethane composition according to any of claims 1 to 3, wherein a diol component is contained as the polyol component (b) and the diol component is a polyesterdiol.

5. The water-dispersed polyurethane composition according to any of claims 1 to 4, further comprising an anionic group-introducing compound (c1) and an anionic group neutralizer (d1) as essential components.

6. The water-dispersed polyurethane composition according to claim 5, wherein the anionic group in the anionic group-introducing compound (c1) is a carboxyl group or a sulfonic acid group.

7. The water-dispersed polyurethane composition according to any of claims 1 to 6, further comprising a cationic group-introducing compound (c2) and a cationic group neutralizer (d2) as essential components.

8. The water-dispersed polyurethane composition according to claim 7, wherein the cationic group in the cationic group-introducing compound (c2) is a tertiary amino group.

9. The water-dispersed polyurethane composition according to any of claims 1 to 8, wherein polyoxyethylene units are present in the main-chain or side-chain of the polyurethane and the content of the polyoxyethylene units is not less than 1 % by mass in the polyurethane.

10. Use of the water-dispersed polyurethane composition according to any of claims 1 to 9, as a paint.

11. Use of the water-dispersed polyurethane composition according to claim 10, wherein the paint is a paint for surface-treated steel plates.

## Patentansprüche

1. Wasserdispergierte Polyurethanzusammmensetzung, umfassend eine Polyisocyanatkomponente (a), eine Polyolkomponente (b), und Wasser als essentielle Komponenten, wobei mindestens ein Isocyanat, das durch die unten angegebene allgemeine Formel (I) dargestellt wird, als die Polyisocyanatkomponente (a) verwendet wird: 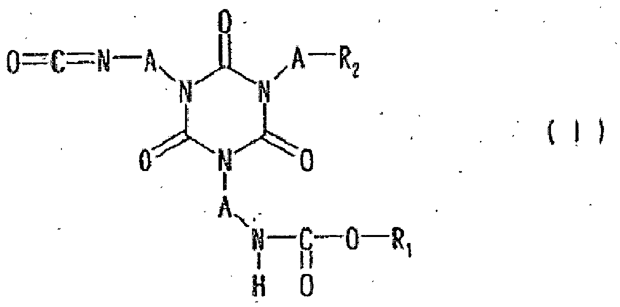 wobei R₁ eine Alkylgruppe, die 10 bis 30 Kohlenstoffatome aufweist, darstellt, R₂ -N=C=O oder -NH-C(=O)-O-R₁ darstellt, und A mit Ausnahme von zwei Gruppen -N=C=O einen Rest darstellt, der von einem Diisocyanat abgeleitet ist.

2. Wasserdispergierte Polyurethanzusammensetzung nach Anspruch 1, wobei A in der oben angegebenen allgemeinen Formel (I) mit Ausnahme von zwei Gruppen -N=C=O der Rest ist, der von 1,6-Hexamethylendiisocyanat abgeleitet ist.

3. Wasserdispergierte Polyurethanzusammensetzung nach einem der Ansprüche 1 oder 2, wobei Dicyclohexylmethan-4,4'-diisocyanat zusätzlich als die Polyisocyanatkomponente (a) verwendet wird.

4. Wasserdispergierte Polyurethanzusammensetzung nach einem beliebigen der Ansprüche 1 bis 3, wobei eine Diolkomponente als die Polyolkomponente (b) enthalten ist und die Diolkomponente ein Polyesterdiol ist.

5. Wasserdispergierte Polyurethanzusammensetzung nach einem beliebigen der Ansprüche 1 bis 4, weiter umfassend eine Verbindung (c1), die eine anionische Gruppe einführt, und einen Neutralisator für eine anionische Gruppe (d1) als essentielle Komponenten.

6. Wasserdispergierte Polyurethanzusammensetzung nach Anspruch 5, wobei die anionische Gruppe in der Verbindung (c1), die eine anionische Gruppe einführt, eine Carboxylgruppe oder eine Sulfonsäuregruppe ist.

7. Wasserdispergierte Polyurethanzusammensetzung nach einem beliebigen der Ansprüche 1 bis 6, weiter umfassend eine Verbindung (c2), die eine kationische Gruppe einführt, und einen Neutralisator für eine kationische Gruppe (d2) als essentielle Komponenten.

8. Wasserdispergierte Polyurethanzusammensetzung nach Anspruch 7, wobei die kationische Gruppe in der Verbindung (c2), die eine kationische Gruppe einführt, eine tertiäre Aminogruppe ist.

9. Wasserdispergierte Polyurethanzusammensetzung nach einem beliebigen der Ansprüche 1 bis 8, wobei Polyoxyethyleneinheiten in der Hauptkette oder Seitenkette des Polyurethans vorhanden sind und der Gehalt der Polyoxyethyleneinheiten nicht weniger als 1 Massen-% in dem Polyurethan beträgt.

10. Verwendung der wasserdispergierten Polyurethanzusammensetzung nach einem beliebigen der Ansprüche 1 bis 9 als eine Farbe.

11. Verwendung der wasserdispergierten Polyurethanzusammensetzung nach Anspruch 10, wobei die Farbe eine Farbe für oberflächenbehandelte Stahlplatten ist.

## Revendications

1. Composition de polyuréthane hydrodispersée comprenant un composant polyisocyanate (a), un composant polyol (b), et de l'eau en tant que composants essentiels, dans laquelle, au moins un isocyanate représenté par la formule générale (I) ci-dessous est utilisé en tant que composant polyisocyanate (a): 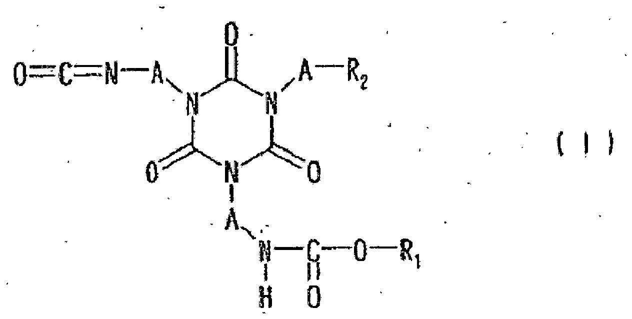 où R₁ représente un groupe alkyle comportant 10 à 30 atomes de carbone, R₂ représente -N=C=O ou -NH-C(=O)-O-R₁, et A représente un résidu autre que deux groupes -N=C=O dérivé d'un diisocyanate.

2. Composition de polyuréthane hydrodispersée selon la revendication 1, où A dans la formule générale (I) ci-dessus est le résidu autre que deux groupes -N=C=O dérivé du diisocyanate de 1,6-hexaméthylène.

3. Composition de polyuréthane hydrodispersée selon les revendications 1 ou 2, dans laquelle du dicyclohexylméthane-4,4'-diisocyanate est utilisé en outre en tant que composant polyisocyanate (a).

4. Composition de polyuréthane hydrodispersée selon l'une quelconque des revendications 1 à 3, dans laquelle un composant diol est contenu en tant que composant polyol (b) et le composant diol est un polyesterdiol.

5. Composition de polyuréthane hydrodispersée selon l'une quelconque des revendications 1 à 4, comprenant en outre un composé introduisant un groupe anionique (c1) et un agent neutralisant de groupe anionique (d1) en tant que composants essentiels.

6. Composition de polyuréthane hydrodispersée selon la revendication 5, dans laquelle le groupe anionique dans le composé introduisant un groupe anionique (c1) est un groupe carboxyle ou un groupe acide sulfonique.

7. Composition de polyuréthane hydrodispersée selon l'une quelconque des revendications 1 à 6, comprenant en outre un composé introduisant un groupe cationique (c2) et un agent neutralisant de groupe cationique (d2) en tant que composants essentiels.

8. Composition de polyuréthane hydrodispersée selon la revendication 7, dans laquelle le groupe cationique dans le composé introduisant un groupe cationique (c2) est un groupe amino tertiaire.

9. Composition de polyuréthane hydrodispersée selon l'une quelconque des revendications 1 à 8, dans laquelle des unités de polyoxyéthylène sont présentes dans la chaîne principale ou la chaîne latérale du polyuréthane et la teneur en unités de polyoxyéthylène n'est pas inférieure à 1 % en masse dans le polyuréthane.

10. Utilisation de la composition de polyuréthane hydrodispersée selon l'une quelconque des revendications 1 à 9, en tant que peinture.

11. Utilisation de la composition de polyuréthane hydrodispersée selon la revendication 10, où la peinture est une peinture pour des plaques d'acier traitées à la surface.
